## Europäisches Patentamt

## European Patent Office

## Office européen des brevets

(19)

(11) Veröffentlichungsnummer: **0 063 791**
**B1**

(12) # EUROPÄISCHE PATENTSCHRIFT

(45) Veröffentlichungstag der Patentschrift:
27.03.85

(51) Int. Cl.⁴: **C 02 F 1/48**, B 03 C 5/02

(21) Anmeldenummer: **82103392.5**

(22) Anmeldetag: **22.04.82**

(54) **Verfahren und Vorrichtung zur Gewinnung disperser Phasen aus Dispersionen.**

(30) Priorität: **27.04.81 DE 3116623**

(43) Veröffentlichungstag der Anmeldung:
**03.11.82 Patentblatt 82/44**

(45) Bekanntmachung des Hinweises auf die Patenterteilung:
**27.03.85 Patentblatt 85/13**

(84) Benannte Vertragsstaaten:
**AT CH DE FR GB IT LI NL SE**

(56) Entgegenhaltungen:
**US - A - 1 392 524**
**US - A - 3 445 376**
**US - A - 3 915 822**
**US - A - 3 923 629**
**US - A - 3 980 541**

(73) Patentinhaber: **Doevenspeck, Heinz, Sigurdstrasse 1,
D-4950 Minden (DE)**

(72) Erfinder: **Doevenspeck, Heinz, Sigurdstrasse 1,
D-4950 Minden (DE)**

(74) Vertreter: **Bolte, Erich, Dipl.-Ing., Hollerallee 73,
D-2800 Bremen (DE)**

## Beschreibung

Die Erfindung betrifft ein Verfahren und eine Vorrichtung zur Gewinnung disperser Phasen aus Dispersionen, wobei die Dispersionen zwischen Elektroden impulsartig entladenen, durch hochgespannte Kondensatoren erzeugten Gleichspannungsfeldern und elektromagnetischen Impulsen ausgesetzt werden.

Zu diesem Zweck erfolgt die Behandlung üblicherweise in einem Kessel mit Einlaß und Auslaß, wobei eine an eine Spannungsversorgung angeschlossene Kondensatoranordnung zur Erzeugung der elektrischen Felder vorgesehen ist. Diese Kondensatoren können impulsartig entladen werden, so daß die zu behandelnden Flüssigkeiten den polarisierenden Wirkungen des Verschiebungsstromes der Entladung ausgesetzt werden.

Ein Verfahren dieser Art ist beispielsweise in der auf den Anmelder zurückgehenden DE-A-2 907 887 beschrieben, wobei dort zur Behandlung der dispersen Systeme verschiedene Zusätze hinzugefügt werden, um Oxidations- oder Reduktions-Reaktionen auszulösen oder bestimmte pH-Werte oder Konzentrationen zu erzielen.

Aufgabe der Erfindung ist es, ein Verfahren und eine Vorrichtung der in Rede stehenden Art anzugeben, die eine wesentlich wirkungsvollere Abtrennung disperser Phasen und Behandlung von Abwässern ermöglicht, wobei gleichzeitig die Wirtschaftlichkeit verbessert wird.

Diese Aufgabe wird erfindungsgemäß durch die im Kennzeichenteil der Patentansprüche 1 bzw. 5 angegebenen Merkmale gelöst.

Durch die Wicklungen aus leitfähigem Gewebe und Isolierschichten wird die Entladezeitkonstante im Vergleich zu herkömmlichen Elektroden so weit vergrößert, daß sich eine Verbesserung der Abscheidung um einen Faktor in der Größenordnung von 20—30 ergibt. Dies ist darauf zurückzuführen, daß die elektrokinetische Abscheidung von Inhaltsstoffen eines Ionenleiters von der Dauer der Umladung abhängig ist. Gleichzeitig werden in den Dispersionen enthaltene Einzelorganismen mit höherer Wahrscheinlichkeit geschädigt. Ein weiterer Vorteil des erfindungsgemäßen Verfahrens ist darin zu sehen, daß die Wirtschaftlichkeit bei einer derartigen elektrischen Impulsbehandlung weiter verbessert wird, denn es werden für die Wirkung der Entladungen oder Impulse weniger Entladungen pro Zeiteinheit erforderlich, so daß sich hierdurch die thermische Belastung der dispersen Systeme infolge der durch die Entladungen auftretenden Joule'schen Wärme verringert.

In Weiterbildung des erfindungsgemäßen Verfahrens werden die Dispersionen durch Wicklungen spiralförmig hindurchgeführt.

Besonders vorteilhaft ist es, wenn man Kohlenstoffgewebe, Kunststoffgewebe und/oder metallisierte Gewebe als leitfähige Gewebe verwendet, während man zweckmäßigerweise Kunststoff-Folie für die Isolierschichten verwendet.

Die Vorrichtung gemäß Anspruch 5 weist einen ebenso einfachen wie wirkungsvollen Aufbau auf, um die Behandlung von Dispersionen mit elektrischem Impulsbetrieb vorzunehmen und dabei die eingangs genannten Vorteile zu erzielen.

In Weiterbildung der Vorrichtung besteht die an der Trommel anliegende innere Lage vollständig aus leitfähigem Gewebe. Damit wird in vorteilhafter Weise eine sichere Ionenleitung und Ableitung von Joule'scher Wärme gewährleistet.

Das leitfähige Gewebe besteht aus metallisiertem Material, Kunststoff und/oder Kohlenstoff, wobei die Wahl in Abhängigkeit von der Leitfähigkeit des zu behandelnden dispersen Systems erfolgt. Als Isolationsmaterial für die einzelnen Lagen zwischen dem leitfähigen Gewebe wird zweckmäßigerweise Kunststoff-Folie verwendet.

Wenn in Weiterbildung der erfindungsgemäßen Vorrichtung die Kunststoff-Folie breiter als das leitfähige Gewebe ausgebildet und das leitfähige Gewebe seitlich überlappend an der Trommel befestigt ist, so wird damit in wirkungsvoller Weise gewährleistet, daß das zu behandelnde disperse System eine spiralförmige Bahn mit langer Verweilzeit in der Behandlungskammer durchläuft und dabei der Wirkung der impulsartig entladenen Kondensatoren ausgesetzt ist.

Die Trommel der Vorrichtung ist zweckmäßigerweise als perforiertes Rohr aus isolierendem Material, z. B. aus PVC, ausgebildet, um die gewünschte Isolation zu gewährleisten, wobei derartiges Material leicht zu bearbeiten ist.

Wenn die Wickelmodule isoliert zwischen zwei Stirnwänden aus Kunststoff eingegossen sind, so wird damit in wirkungsvoller Weise gewährleistet, daß das zu behandelnde disperse System eine spiralförmige Bahn bei seiner Behandlung durchläuft.

Bei einer Ausführungsform der erfindungsgemäßen Vorrichtung weist das leitfähige Gewebe an der Trommel einen elektrischen Anschluß auf und bildet eine Elektrode, während das Gehäuse der Vorrichtung als Gegenelektrode ausgebildet ist. Bei dieser Ausführungsform bildet die Wickelanordnung eine als Membran wirkende Arbeitselektrode.

Bei einer anderen Ausführungsform ist im Zentrum der Trommel jedes Wickelmoduls eine Stabelektrode angeordnet, während die Gegenelektroden von konzentrisch um die Wickelmodule angeordneten Zugstangen gebildet werden, die an gegenüberliegenden Stirnblechen der Wickelmodule befestigt sind. In diesem Falle bilden die Wickelmodule eine elektrostatische Membran und trennen die Behandlungskammer in einen Anodenteil und einen Kathodenteil, wobei die Länge der aus leitfähigem Gewebe und Isoliermaterial bestehende Wicklung die Wirksamkeit dieser elektrostatischen Membran bestimmt.

Wenn in Weiterbildung der erfindungsgemäßen Vorrichtung die im Druckkessel angeordneten Wickelmodule in entgegengesetzter Richtung zur Durchflußrichtung der dispersen Systeme mit Druckgas, z. B. Preßluft, beaufschlagbar sind, so läßt sich die Vorrichtung in vorteilhafter Weise reinigen, denn das Druckgas setzt bei dieser Beaufschlagung Teilchen frei, die sich im Gewebe der Vorrichtung festgesetzt haben.

Besonders vorteilhaft ist, wenn zu diesem Zweck die Trommeln im Druckkessel mit ihren Innenräumen an Auslaßventile angeschlossen sind, die als Einlaßventile für Druckgas einsetzbar sind, während die Wirkung des Druckgases zu Reinigungszwecken noch verbessert werden kann, wenn die Wicklungen der Wickelmodule bei der Baufschlagung mit Druckgas elastisch aufweitbar sind. Die herausgeblasenen Dispersoide lassen sich anschließend aus dem Druckkessel herausspülen, so daß die Vorrichtung auch über längere Zeiträume einsetzbar ist, ohne daß zu Reinigungszwecken die verschiedenen Wickelmodule ausgebaut werden müssen.

Die Erfindung wird nachstehend anhand der Beschreibung von Ausführungsbeispielen und unter Bezugnahme auf die Zeichnung näher erläutert. Die Zeichnung zeigt in

Fig. 1 eine schematische Seitenansicht der erfindungsgemäßen Vorrichtung;

Fig. 2 eine Seitenansicht der Vorrichtung nach Fig. 1 im Schnitt zur Erläuterung ihres Aufbaus;

Fig. 3 einen Querschnitt durch die Anordnung gemäß Fig. 2;

Fig. 4 einen schematischen Teilquerschnitt in vergrößertem Maßstab durch einen Wickelmodul gemäß Fig. 2;

Fig. 5 einen Schnitt durch eine andere Ausführungsform eines Wickelmoduls für die erfindungsgemäße Vorrichtung;

Fig. 6 eine schematische Darstellung im Schnitt durch eine erfindungsgemäße Vorrichtung mit Wickelmodulen gemäß Fig. 5; und in

Fig. 7 einen Querschnitt durch die Anordnung gemäß Fig. 6 zur Erläuterung der Anordnung der Wickelmodule innerhalb des Druckkessels.

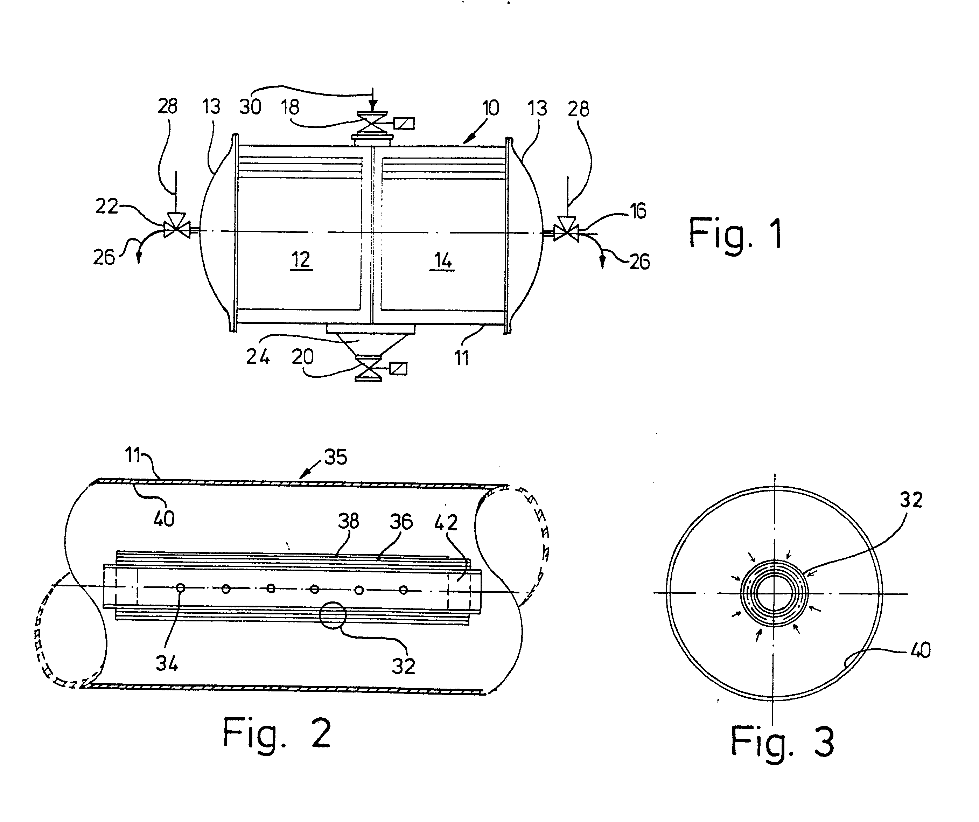

In Fig. 1 erkennt man einen Druckkessel 10, in welchem zwei Moduleinschübe 12 und 14 angeordnet sind. Die beiden Stirnwände sind mit 13 bezeichnet. An der Oberseite ist ein Einlaß 30, z. B. für Abwasser, bei einem Ventil 18 vorgesehen. Die Auslässe 26 werden von Ventilen 16 bzw. 22 an den beiden Stirnwänden 13 gebildet. Aus diesen Auslässen 26 lassen sich die behandelten Systeme, z. B. entsalzenes Wasser, abziehen. An der Unterseite des Druckkessels 10 erkennt man einen Schlammaufnahmebehälter 24, der mit einem Ventil 20 für den Austrag versehen ist.

Die zu behandelnden dispersen Systeme werden somit durch das Ventil 18 am Einlaß 30 in den Druckkessel 10 eingeführt und können nach ihrer Behandlung durch die Auslässe 26 abgezogen werden. Zu Reinigungszwecken ist es wünschenswert, wenn die Ventile 16 und 22 so ausgelegt sind, daß der Druckkessel in entgegengesetzter Richtung zur Durchflußrichtung der dispersen Systeme mit Druckgas, z. B. Preßluft, beaufschlagbar ist, wie es durch die Pfeile 28 bei den Ventilen 16 und 22 angedeutet ist.

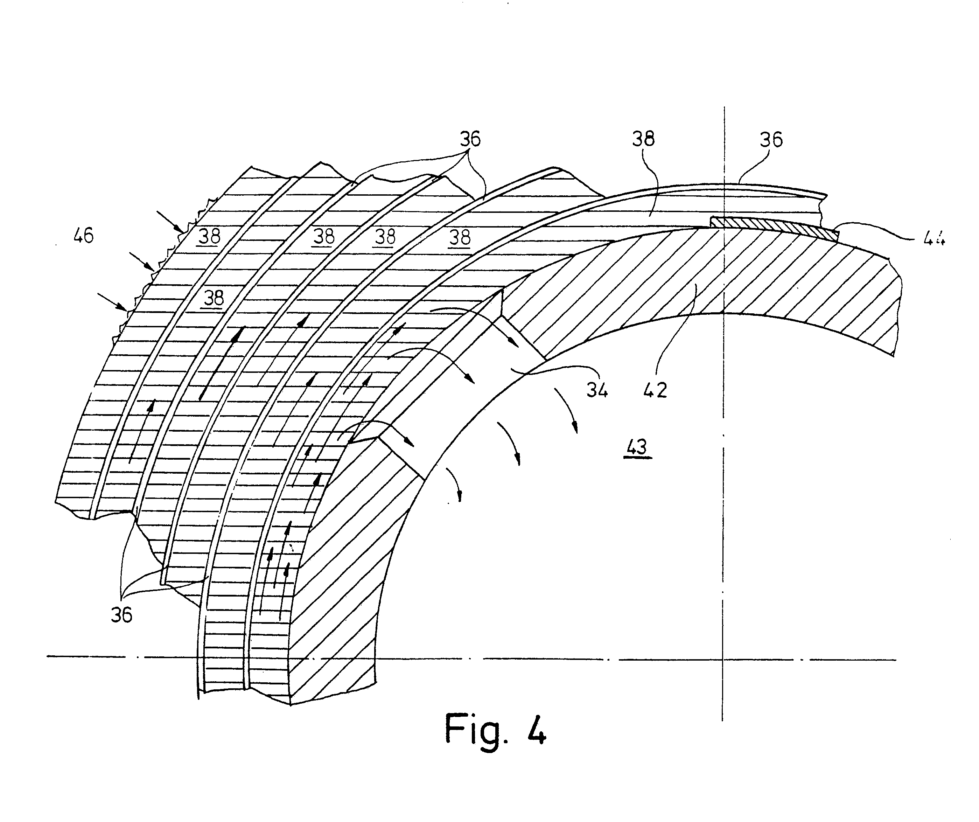

Der Aufbau und die Wirkungsweise der Vorrichtung ergeben sich deutlicher aus den Fig. 2 bis 4. Auf eine Trommel 42, die von einer Rohrwand gebildet wird, ist eine Wickelanordnung in Form einer Doppelwicklung spiralförmig aufgewickelt, wobei die Doppelwicklung aus Materialien besteht, die zu einer wesentlichen Erhöhung der Entladezeitkonstante der Kondensatoranordnung führen. Wie in Fig. 4 angedeutet, wird diese Wickelanordnung abwechselnd von zwei verschiedenen Lagen gebildet, nämlich einer Lage aus leitfähigem Gewebe 38 und einer Lage aus Isolationsmaterial 36. Die Anordnung ist dabei so getroffen, daß die Außenoberfläche der Trommel 42 vollständig von der Lage aus leitfähigem Gewebe 38 bedeckt ist, um eine sichere Ionenleitung und Ableitung von Joule'scher Wärme zu gewährleisten.

Wie in Fig. 2 und 4 angedeutet, ist die Trommel 42 hohl ausgebildet und besitzt hindurchgehende Ablauföffnungen 34 in ihrer Wand, wobei es sich um Ablaufbohrungen oder Schlitze handeln kann, die über die gesamte Fläche der Trommel 42 verteilt vorgesehen sind.

Als Isolationsmaterial verwendet man zweckmäßigerweise eine Kunststoff-Folie 36, während für das leitfähige Gewebe 38 Gewebe aus metallisierten Materialien, Kunststoff und/oder Kohlenstoff oder Mischungen von diesen in Frage kommen. Die Wahl des Materials für das leitfähige Gewebe 38 wird von der Leitfähigkeit des zu behandelnden dispersen Systems abhängen. Für den Fall, daß diese Leitfähigkeit des dispersen Systems groß genug ist, um eine Entladung zu gewährleisten, so genügt ein Gewebe aus Kunststoff. Ist jeoch die Leitfähigkeit des zu behandelnden dispersen Systems für die Entladung klein, so muß das Gewebe leitfähiger sein, um die Entladung zu gewährleisten. In solchen Fällen wird man dann zweckmäßigerweise Gewebe aus Kohlenstoff oder metallisierte Gewebe verwenden.

Wie in Fig. 4 angedeutet, ist ein mit dem leitfähigen Gewebe 38 verbundener elektrischer Anschluß 44 vorgesehen, so daß die Wicklung auf der Trommel 42 eine Arbeitselektrode 32 in Form einer Membran darstellt. Die Gegenelektrode 40 wird vom Gehäuse 11 gebildet, wobei diese beiden Elektroden an eine nicht dargestellte Gleichspannungsversorgung angeschlossen ist, die der so gebildeten Kondensatoranordnung eine Hochspannung in der Größenordnung von einigen Kilovolt zur Verfügung stellt, die in Abhängigkeit von den jeweiligen Arbeitsbedingungen gewählt und eingestellt wird.

Der gesamte Wickelmodul ist in Fig. 2 mit 35 bezeichnet, wobei die Folie 36 aus Isolationsmaterial breiter ausgebildet ist als das leitfähige Gewebe 38, so daß die Folie 36 das leitfähige Gewebe 38 seitlich überlappt und an der Trommel 42 befestigt ist. Die Trommel 42 selbst ist als perforiertes Rohr aus isolierendem Material ausgebildet und kann beispielsweise aus PVC bestehen. Zweckmäßigerweise sind derartige Wickelmodule 35 isoliert zwischen zwei Stirnwänden aus Kunststoff eingegossen.

Mit einer derartigen Anordnung wird erreicht, daß das zu behandelnde disperse System im Druckkessel bei seiner Beaufschlagung mit einem Druck in der Größenordnung von 2 bis 5 bar eine spiralförmige Bahn durchläuft. Die von außen zugeführte Flüssigkeit oder das Rohwasser 46 tritt durch die äußere Wicklung aus leitfähigem Gewebe 38 in die spiralförmige Wickelanordnung ein und bewegt sich in der in Fig. 4 mit Pfeilen angedeuteten Richtung mehrfach um den Umfang der Trommel 42 herum, bis es zur innersten Lage aus leitfähigem Gewebe 38 gelangt und dann durch die Ablauföffnungen 34 in den Innenraum 43 der Trommel 42 eintritt, von wo der Abfluß der gereinigten Flüssigkeit durch die Auslässe 26 erfolgt. Während dieser spiralförmigen Bewegung von der äußersten Lage bis zur innersten Lage der Wickelanordnung ist das zu behandelnde System die ganze Zeit der Wirkung der zwischen Elektroden impulsartig entladenen, durch hochgespannte Kondensatoren erzeugten Gleichspannungsfeldern und elektromagnetischen Impulsen ausgesetzt. Auf Grund der Druckbeaufschlagung im Druckkessel erfolgt die Bewegung der zu behandelnden Flüssigkeit zwangsläufig von außen nach innen, da dies den einzigen Weg zum Auslaß 26 darstellt.

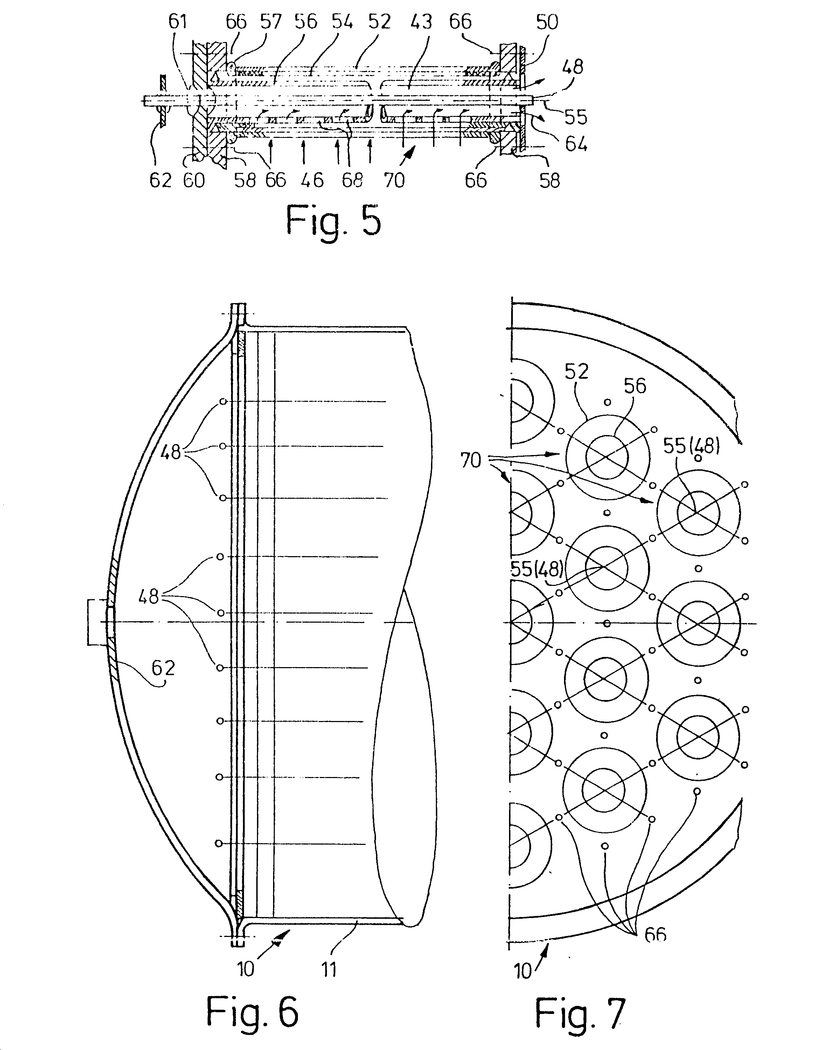

Bei einer anderen Ausführungsform, die in den Fig. 5 bis 7 dargestellt ist, ist im wesentlichen nur die Anordnung der die Kondensatoranordnung bildenden Elektroden geändert, während der Aufbau des Wickelmoduls 70 im wesentlichen der gleiche wie der des Wickelmoduls 35 ist.

Bei der Anordnung nach Fig. 5 ist ein Rohr 56, z. B. aus PVC, vorgesehen, in dessen Innenraum 43 eine Stabelektrode 48 angeordnet ist. Diese Stabelektrode 48 ist in einem Elektrodenhalter 50 befestigt und an einen Elektrodenanschluß 62 angeschlossen, wobei die Stabelektrode 48 durch eine Durchführung 61 hindurchgeführt ist. Auf das Rohr 56 sind in gleicher Weise wie bei der Ausführungsform nach Fig. 2 bis 4 eine Vielzahl von Lagen aus leitfähigem Gewebe 54 und Isolationsmaterial 52 herumgewickelt, so daß der bereits erläuterte spiralförmige Aufbau entsteht.

Auch in diesem Falle bestehen die innerste Lage auf dem Rohr 56 und die äußerste Lage, sozusagen am Eingang in die Wickelanordnung, aus leitfähigem Gewebe 54. Die Gegenelektrode zu der jeweils im Zentrum 55 des Wickelmoduls 70 angeordneten Stabelektrode 48 wird von Zugstangen 66 gebildet, die konzentrisch um den jeweiligen Wickelmodul 70 angeordnet und an gegenüberliegenden Stirnblechen 58 befestigt sind. Dabei sind die Zugstangen 66 einerseits und die Stabelektrode 48 andererseits selbstverständlich elektrisch isoliert gegeneinander angeordnet, wobei die Stabelektrode 48 durch den Abschluß 60 des Elektrodenhalters hindurchgeführt ist. Die Wickelanordnung ist dabei mit einer Befestigung 57 am Stirnblech 58 befestigt oder aber zwischen den beiden Stirnwänden 58 mit Kunststoff eingegossen. In der in Fig. 6 und 7 dargestellten Weise sind Gruppen von derartigen Wickelmodulen 70 als Gruppen oder Bündel in einem derartigen Abstand voneinander im Druckkessel 10 montiert, daß die Zwischenräume zwischen den einzelnen Wickelmodulen 70 die Zugstangen 66 aufnehmen können, wobei diese Zugstangen 66 als Gegenelektroden gleichzeitig für mehrere Wickelmodule vorgesehen sind.

Das zu behandelnde Rohwasser 46 durchläuft also bei dieser Ausführungsform die verschiedenen Lagen aus leitfähigem Gewebe, tritt durch eine Vielzahl von Abflußöffnungen 68 im Umfang des Rohres 56 in dessen Innenraum 43 ein und wird anschließend als gereinigter Austrag 64 abgezogen, wie es mit den Pfeilen im rechten Bereich der Fig. 5 angedeutet ist.

Der Einbau der Wickelmodule 35 bzw. 70 in den Druckkessel erfolgt dabei in der Weise, daß bei der Ausführungsform nach Fig. 2 bis 4 die rohrförmige Trommel im Zentrum des Druckkessels seitlich aus dem eigentlichen Druckkessel herausragt und, gegebenenfalls unter Zwischenschaltung eines Aufnahmebehälters, an den mit Ventil 16 bzw. 22 ausgerüsteten Auslaß 26 angeschlossen ist. Bei der Ausführungsform nach Fig. 5 bis 7 wird man die Innenräume 43 der Vielzahl von im Druckkessel 10 angeordneten Wickelmodule 70 über entsprechende Leitungen an einen Aufnahmebehälter anschließen, der seinerseits mit einem Auslaß 26 gemäß Fig. 1 verbunden ist.

Nachstehend soll die Wirkungsweise des Verfahrens und der Vorrichtung gemäß der Erfindung näher erläutert werden. Bei den beschriebenen Ausführungsformen werden die zu behandelnden Dispersionen durch die Vielzahl von auf Trommeln aufgewickelte Wicklungen hindurchgeführt, wobei die zu behandelnden Systeme selbst als Ionenleiter zwischen den Elektroden eingesetzt werden und den Elektronentransport übernehmen. Durch die spezielle Ausbildung der Wickelmodule unter Verwendung der genannten Materialien wird mit einer wesentlich höheren Entladezeitkonstante der Kondensatoranordnungen gearbeitet als bei einfachen Elektrodenanordnungen, die nur aus einer Arbeitselektrode einerseits und einer Gegenelektrode andererseits mit einem dazwischen befindlichen Elektrolyten bestehen.

Geht man von gleichen Analysewerten des Elektrolyten und gleichen Werten für die Entladungsspannung von etwa 1,5 kV und einer Kapazität von 4 µF aus, so erhält man bei einfachen Elektrodenanordnungen aus Arbeitselektrode und Gegenelektrode eine Entladezeitkonstante in der Größenordnung von etwa 200 bis 300 µs, während gemäß der Erfindung wesentlich höhere Entladezeitkonstanten erzielt werden, die

etwa $6 \times 10^3$ μs betragen. Dies stellt einen Faktor in der Größenordnung von 20 bis 30 dar.

Somit lassen sich gemäß der Erfindung eine ganze Reihe von Vorteilen bei der Behandlung von dispersen Systemen erzielen. Da die elektrokinetische Abscheidung von Inhaltsstoffen eines Ionenleiters von der Dauer der Umladung abhängig ist, ergibt sich eine Verbesserung der Abscheidung um den genannten Faktor von 20 bis 30 durch die erhöhte Entladezeitkonstante. Weiterhin werden Mikroorganismen als Einzelorganismen mit wesentlich höherer Wahrscheinlichkeit geschädigt. Schließlich läßt sich die Wirtschaftlichkeit einer entsprechenden Vorrichtung zur Elektroimpulsbehandlung verbessern, denn es sind für die Wirkung der Entladungen oder Impulse eine geringere Anzahl von Entladungen pro Zeiteinheit erforderlich, so daß sich die thermische Belastung der dispersen Flüssigkeiten infolge der durch die Entladungen auftretenden Joule'schen Wärme verringern läßt.

Bei der ersten Ausführungsform ist die Arbeitselektrode 32 auf dem Umfang der Trommel ausgebildet, wobei die den Wickelmodul umspülende, zu reinigende Flüssigkeit durch Druckbeaufschlagung spiralförmig von außen in den Innenraum der Trommel eintritt und während dieser spiralförmigen Bahn bei der Entladung von hochgespannten Kondensatoren über die Elektrodenanschlüsse in den Windungen der Spirale den polarisierenden Wirkungen des im Wickelmodul wirksamen Verschiebungsstromes der Entladung sowie an den Elektrodengrenzflächen den elektrolytischen Wirkungen der Kondensatorentladung ausgesetzt wird. Eine Verstärkung dieser Wirkungen der elektromagnetischen Felder in dem spiralförmigen Wickelmodul erfolgt durch die Filterwirkung des Wickelmoduls an der Außenfläche des leitfähigen Gewebes, wobei die in der zu reinigenden Dispersion enthaltenen, dispergierten Phasen durch die Wirkungen der Kondensatorentladungen getrennt und durch die Filterwirkung des leitfähigen Gewebes abgetrennt werden. Dabei können sich die Dispersoide auf den Grenzflächen der Elektrode ablagern.

Bei der zweiten Ausführungsform erfolgt die Entladung zwischen der zentral im Rohr angeordneten Elektrode aus einem Elektronenleiter als Arbeitselektrode und der Gegenelektrode als Elektronenleiter über das zu behandelnde, disperse System als Ionenleiter, das sich in den Zwischenräumen des leitfähigen Gewebes des Wickelmoduls ausbreitet. Dabei ist es nicht unbedingt erforderlich, daß das leitfähige Gewebe aus Kohlenstoff oder aus metallisiertem Gewebe besteht. Wenn nämlich die Leitfähigkeit des zu behandelnden dispersen Systems groß genug ist, daß die Entladung gewährleistet ist, so kann ein Gewebe aus Kunststoff bereits ausreichen. Wenn jedoch eine zu geringe Leitfähigkeit des zu behandelnden dispersen Systems vorhanden ist, so muß das Gewebe leitfähiger sein, um die Entladung zu gewährleisten.

In diesem Zusammenhang ist eine Anordnung von Vorteil, bei der die Elektrode und die Gegenelektrode nicht direkt an den Wickelmodul angeschlossen sind, so daß die für die Entladung erforderliche Verbindung durch die Ionenleitung des zu behandelnden dispersen Systems erfolgt. Der Wickelmodul wirkt dabei als elektrostatische Membran und trennt dabei den Behandlungsraum für das Elektroimpulsverfahren in einen Anodenteil und einen Kathodenteil. Die Wirksamkeit des eine Membran bildenden Wickelmoduls ist dabei abhängig von der Länge der aus leitfähigem Gewebe und Isoliermaterial bestehenden Doppelwicklung, darüber hinaus selbstverständlich auch noch von der Kapazität und Spannung des die Entladung bewirkenden Arbeitskondensators. Wichtig ist in jedem Falle, daß die innerste Lage des Wickelmoduls auf der Trommel oder dem Rohr vollständig aus leitfähigem Gewebe besteht, um eine sichere Ionenleitung und Ableitung von Joul'scher Wärme zu gewährleisten.

Wie leicht einsichtig, hängt die Trennwirkung der vom Wickelmodul gebildeten Membran einerseits von der Anzahl der Wicklungen und andererseits von der Fadendicke und Fadendichte des verwendeten leitfähigen Gewebes ab. Diese Parameter, die sowohl die Weglänge als auch den Widerstand für die zu behandelnden Partikel bestimmen, geben die Filterwirkung vor, wobei sich zu dieser Filterwirkung beim Durchfluß von dispersen Systemen durch die Anordnung ein Strömungspotential hinzuaddiert, das sich infolge der Reibung der Flüssigkeitsmoleküle in den Kapillaren des Wickelmodules aufbaut und das einen Wert von etwa 800 mV erreichen kann. Die Abscheidung der Dispersoide wird durch dieses Strömungspotential weiter verstärkt.

Bei der Behandlung der dispersen Systeme in einer derartigen Vorrichtung werden in Abhängigkeit von den Anteilen an Dispersoiden und gelösten Stoffen im dispersen System, der Betriebsdauer der Wickelmodule und der aufgebrachten Energie bei der Elektroimpulsbehandlung Stoffe in und auf der Wicklung aus Gewebe abgeschieden, die zu einer Erhöhung des Betriebsdruckes führen. Von Zeit zu Zeit ist es daher erforderlich, die Wickelmodule im Druckkessel zu reinigen und die abgeschiedenen Stoffe aus dem Druckkessel zu entfernen. Zu diesem Zweck werden die im Druckkessel angeordneten Wickelmodule in entgegengesetzter Richtung zur Durchflußrichtung der dispersen Systeme mit Druckgas, z. B. Preßluft, beaufschlagt, wobei man in einfacher Weise derartiges Druckgas bei den Ventilen in den Druckkessel hineinläßt, die sonst als Auslaßventile für die behandelten Systeme dienen. Die Wicklungen der Wickelmodule sind zu Reinigungszwecken bei Beaufschlagung mit Druckgas elastisch aufweitbar, so daß eine entsprechende Spaltbreite entsteht. Die auf diese Weise aus den Wickelmodulen entfernten abgeschiedenen Stoffe können anschließend über den mit Ventil 20 ausgerüsteten Schlammaufnahmebehälter 24 aus dem Druckkessel 10 entfernt werden, anschließend steht der Druckkessel dann mit seinen Wickelmodulen zur weiteren Behandlung von dispersen Systemen zur Verfügung.

## Patentansprüche

1. Verfahren zur Gewinnung disperser Phasen aus Dispersionen, bei dem die Dispersionen zwischen Elektroden impulsartig entladenen, durch hochgespannte Kondensatoren erzeugten Gleichspannungsfeldern und elektromagnetischen Impulsen ausgesetzt werden, dadurch gekennzeichnet, daß die Dispersionen bei ihrer Behandlung durch mehrere auf eine Trommel aufgewickelte Wicklungen aus leitfähigem Gewebe und Isolierschichten hindurchgeführt werden und daß die Dispersionen der zu behandelnden Systeme als Ionenleiter für den Elektronen-Transport zwischen den Elektroden eingesetzt werden.

2. Verfahren nach Anspruch 1, dadurch gekennzeichnet, daß die Dispersionen durch die Wicklungen spiralförmig hindurchgeführt werden.

3. Verfahren nach Anspruch 2, dadurch gekennzeichnet, daß Kohlenstoffgewebe, Kunststoffgewebe und/oder metallisierte Gewebe als leitfähige Gewebe verwendet werden.

4. Verfahren nach einem der Ansprüche 1 bis 3, dadurch gekennzeichnet, daß Kunststoff-Folie für die Isolierschichten verwendet wird.

5. Vorrichtung zur Gewinnung disperser Phasen aus Dispersionen, mit einem Druckkessel mit Einlaß und Auslaß, mit einer im Druckkessel angeordneten und an eine Spannungsversorgung angeschlossenen Kondensatoranordnung, mit der die Dispersionen zwischen Elektroden impulsartig entladenen, durch hochgespannte Kondensatoren erzeugten Gleichspannungsfeldern und elektromagnetischen Impulsen ausgesetzt werden, dadurch gekennzeichnet, daß im Druckkessel (10) mindestens eine auf einer Trommel (42) angeordnete Wickelanordnung (36, 38) aus leitfähigem Gewebe und einer Lage aus Isoliermaterial in Form von spiralförmig herumgewickelten Doppelwicklungen vorgesehen ist, die einen Wickelmodul (35, 70) bildet, und daß die Trommel (42) hohl ausgebildet ist und in ihrer Wand hindurchgehende Ablauföffnungen (34) aufweist.

6. Vorrichtung nach Anspruch 5, dadurch gekennzeichnet, daß die an der Trommel (42) anliegende innere Lage der Doppelwicklungen vollständig aus dem leitfähigen Gewebe (38) besteht.

7. Vorrichtung nach Anspruch 5 oder 6, dadurch gekennzeichnet, daß das leitfähige Gewebe (38) aus metallisiertem Material, Kunststoff und/oder Kohlenstoff besteht.

8. Vorrichtung nach einem der Ansprüche 5 bis 7, dadurch gekennzeichnet, daß das Isolationsmaterial aus Kunststoff-Folie besteht.

9. Vorrichtung nach einem der Ansprüche 5 bis 8, dadurch gekennzeichnet, daß die Kunststoff-Folie (36) breiter als das leitfähige Gewebe (38) ausgebildet ist und daß das leitfähige Gewebe (38) seitlich überlappend an der Trommel (42) befestigt ist.

10. Vorrichtung nach einem der Ansprüche 5 bis 9, dadurch gekennzeichnet, daß die Trommel (42) als perforiertes Rohr aus isolierendem Material, z. B. aus PVC, ausgebildet ist.

11. Vorrichtung nach einem der Ansprüche 5 bis 10, dadurch gekennzeichnet, daß die Wickelmodule (35, 70) isoliert zwischen zwei Stirnwänden aus Kunststoff eingegossen sind.

12. Vorrichtung nach einem der Ansprüche 5 bis 11, dadurch gekennzeichnet, daß das leitfähige Gewebe (38) an der Trommel (42) einen elektrischen Anschluß (44) aufweist und eine Elektrode (32) bildet, während das Gehäuse als Gegenelektrode (40) ausgebildet ist.

13. Vorrichtung nach einem der Ansprüche 5 bis 11, dadurch gekennzeichnet, daß im Zentrum (55) der Trommel (42) jedes Wickelmoduls (70) eine Stabelektrode (48) angeordnet ist, während die Gegenelektroden von konzentrisch um die Wickelmodule (70) angeordneten Zugstangen (66) gebildet werden, die an gegenüberliegenden Stirnblechen (58) der Wickelmodule (70) befestigt sind.

14. Vorrichtung nach einem der Ansprüche 5 bis 13, dadurch gekennzeichnet, daß die im Druckkessel (10) angeordneten Wickelmodule (35, 70) in entgegengesetzter Richtung zur Durchflußrichtung der dispersen Systeme mit Druckgas, z. B. Preßluft, beaufschlagbar sind.

15. Vorrichtung nach einem der Ansprüche 5 bis 14, dadurch gekennzeichnet, daß die Trommel (42) im Druckkessel (10) mit ihren Innenräumen (43) an Auslaßventile (16, 22) angeschlossen sind, die als Einlaßventile für Druckgas einsetzbar sind.

16. Vorrichtung nach einem der Ansprüche 5 bis 15, dadurch gekennzeichnet, daß die Wicklungen der Wickelmodule (35, 70) bei Beaufschlagung mit Druckgas zu Reinigungszwecken elastisch aufweitbar sind.

## Claims

1. Process for obtaining disperse phases from dispersions, in which the dispersions are exposed between electrodes to d. c. voltage fields discharged in pulse-like manner and produced by capacitors at high voltage, as well as electromagnetic pulses, characterized in that during their treatment, the dispersions are passed through a plurality of windings of conductive fabric wound onto a drum and insulating layers and that the dispersions of the systems to be treated are used as ion guides for electron transfer between the electrodes.

2. Process according to claim 1, characterized in that the dispersions are passed spirally through the windings.

3. Process according to claim 2, characterized in that carbon fabrics, plastic fabrics and/or metallized fabrics are used as the conductive fabric.

4. Process according to one of the claims 1 to 3, characterized in that plastic film is used for the insulating layers.

5. Apparatus for obtaining disperse phases from dispersions, with a pressure vessel having an inlet and an outlet, with a capacitor arrangement arranged in the pressure vessel and connected to a voltage supply, with which the dispersions between the electrodes are exposed to d. c. voltage fields discharged in pulse-like manner and produced by capacitors at high voltage, as well as electromagnetic pulses, characterized in that the pressure vessel (10) contains at least one winding arrangement (36, 38), arranged on a drum (42) and formed from conductive fabric and a layer of insulating material in the form of spirally wound double windings, which forms a winding module (35, 70) and that the drum (42) is hollow and has discharge openings (34) through its wall.

6. Apparatus according to claim 5, characterized in that the inner layer of double windings engaging with the drum (42) entirely comprises the conductive fabric (38).

7. Apparatus according to claim 5 or 6, characterized in that the conductive fabric (38) comprises metallized material, plastic and/or carbon.

8. Apparatus according to one of the claims 5 to 7, characterized in that the insulating material comprises a plastic film.

9. Apparatus according to one of the claims 5 to 8, characterized in that the plastic film (36) is wider than the conductive fabric (38) and that the latter is fixed to the drum (42) so as to laterally overlap the same.

10. Apparatus according to one of the claims 5 to 9, characterized in that the drum (42) is constructed as a perforated tube of insulating material, e. g. PVC.

11. Apparatus according to one of the claims 5 to 10, characterized in that the winding modules (35, 70) are introduced in insulated manner between two plastic end walls.

12. Apparatus according to one of the claims 5 to 11, characterized in that the conductive fabric (38) on the drum (42) has an electrical connection (44) and forms an electrode (32), whilst the casing is constructed as the opposite electrode (40).

13. Apparatus according to one of the claims 5 to 11, characterized in that in the centre (55) of the drum (42) of each winding module (70) is provided a rod electrode (48), whilst the opposite electrodes are formed by tie rods (66) arranged concentrically around the winding module and which are fixed to opposite front plates (58) of said module (70).

14. Apparatus according to one of the claims 5 to 13, characterized in that the winding modules (35, 70) arranged in the pressure vessel (10) can be subjected to the action of pressurized gas, e. g. compressed air, in the direction opposite to the flow direction of the disperse systems.

15. Apparatus according to one of the claims 5 to 14, characterized in that the drums (42) in the pressure vessel (10) are connected by their inner areas (43) to outlet valves (16, 22), which can be used as inlet valves for pressurized gas.

16. Apparatus according to one of the claims 5 to 15, characterized in that, on subjecting to the action of pressurized gas for cleaning purposes, the windings of the winding modules (35, 70) can be elastically expanded.

**Revendications**

1. Procédé d'extraction de phases dispersées à partir de dispersions, dans lequel les dispersions sont soumises à des champs électriques continus et des impulsions électromagnétiques produits par des condensateurs à haute tension et déchargés par impulsions entre des électrodes, caractérisé par le fait que les dispersions, pour leur traitement, passent dans plusieurs enroulements en tissu conducteur et couches isolantes enroulés sur un tambour, et que les dispersions des systèmes à traiter sont utilisées comme conducteurs ioniques pour le transport des électrons entre les électrodes.

2. Procédé selon la revendication 1, caractérisé par le fait que les dispersions passent en spirale dans les enroulements.

3. Procédé selon la revendication 2, caractérisé par le fait que, comme tissus conducteurs, sont utilisés des tissus de carbone, des tissus de matière plastique et/ou des tissus métalisés.

4. Procédé selon l'une des revendications 1 à 3, caractérisé par le fait que, pour les couches isolantes, est utilisée une feuille de matière plastique.

5. Appareil d'extraction de phases dispersées à partir de dispersions, comportant un chaudron à pression, à entrée et sortie, et un système condensateur placé dans ce chaudron à pression et relié à une alimentation électrique, avec lequel les dispersions sont soumises à des champs électriques continus et des impulsions électromagnétiques produits par des condensateurs à haute tension et déchargés par impulsions entre des électrodes, caractérisé par le fait que, dans le chaudron à pression (10), est prévu au moins un dispositif à enroulements (36, 38) constitué de tissu conducteur et d'une couche d'isolant sous forme de doubles enroulements en spirale et placé sur un tambour (42), lequel dispositif forme un module à enroulements (35, 70), et que le tambour (42) est creux et présente dans sa paroi des orifices d'écoulement (34) qui traversent celle-ci.

6. Appareil selon la revendication 5, caractérisé par le fait que la couche intérieure des doubles enroulements appliqués contre le tambour (42) est constituée entièrement de tissu conducteur (38).

7. Appareil selon l'une des revendications 5 et 6, caractérisé par le fait que le tissu conducteur (38) est constitué de matière métallisée, de matière plastique et/ou de carbone.

8. Appareil selon l'une des revendications 5 à 7, caractérisé par le fait que l'isolant est constitué de feuille de matière plastique.

9. Appareil selon l'une des revendications 5 à 8, caractérisé par le fait que la feuille de matière plastique (36) est plus large que le tissu conducteur (38) et que ce dernier est fixé latéralement au tambour (42) avec recouvrement.

10. Appareil selon l'une des revendications 5 à 9, caractérisé par le fait que le tambour (42) est formé d'un tube perforé en matière isolante, par exemple en PVC.

11. Appareil selon l'une des revendications 5 à 10, caractérisé par le fait que les modules à enroulements (35, 70) sont scellés, isolés, entre deux parois frontales en matières plastique.

12. Appareil selon l'une des revendications 5 à 11, caractérisé par le fait que le tissu conducteur (38) présente sur le tambour (42) une borne électrique (44) et forme une électrode (32), tandis que l'enveloppe forme la contre-électrode (40).

13. Appareil selon l'une des revendications 5 à 11, caractérisé par le fait qu'au centre (55) du tambour (42) de chaque module à enroulements (70), est placée une électrode tige (48), tandis que les contre-électrodes sont formées par des tirants (66) placés concentriquement autour des modules (70) et fixés à des plaques frontales opposées (58) des modules (70).

14. Appareil selon l'une des revendications 5 à 13, caractérisé par le fait qu'un gaz comprimé, par exemple de l'air comprimé, peut être envoyé dans les modules à enroulements (35, 70) placés dans le chaudron à pression (10) en sens contraire de sens de passage des systèmes dispersés.

15. Appareil selon l'une des revendications 5 à 14, caractérisé par le fait que les espaces intérieurs (43) des tambours (42) sont reliés dans le chaudron à pression (10) à des vannes de sortie (16, 22) qui peuvent être utilisées comme vannes d'entrée de gaz comprimé.

16. Appareil selon l'une des revendications 5 à 15, caractérisé par le fait que les enroulements des modules (35, 70) peuvent s'élargir élastiquement lors de l'envoi de gaz comprimé pour le nettoyage.

Fig. 1

Fig. 2

Fig. 3

Fig. 4

Fig. 5

Fig. 6

Fig. 7